# EUROPÄISCHE PATENTANMELDUNG

(11) **EP 3 967 546 A1**
(43) Veröffentlichungstag der Anmeldung: **16.03.2022**
(21) Anmeldenummer: 21194541.5
(22) Anmeldetag: 02.09.2021
(51) Int. Cl.: B60L 53/30, B60L 53/65, B60L 53/66

(54) **BETRIEBSVERFAHREN FÜR EINE LADESÄULE**

(30) Priorität: 11.09.2020 DE 102020211413
(71) Anmelder: Siemens Aktiengesellschaft, 80333 München (DE)
(72) Erfinder: Bleisteiner, Thomas, 90602 Rengersricht (DE); Falk, Rainer, 85586 Poing (DE); Friedrich, Daniela, 81827 München (DE); Hildner, Christian, 90455 Nürnberg (DE); Kuroczka, Rene, 91154 Roth (DE); Wild, Patrick, 82377 Penzberg (DE)

(57) **Zusammenfassung**

Die Erfindung betrifft ein Verfahren zum Betreiben einer Ladesäule (10) für ein Elektrofahrzeug (20) und eine Ladesäule (10) für ein Elektrofahrzeug (20).

Das erfindungsgemäße Verfahren verfügt wenigstens über die folgenden Schritte:
-- Detektieren eines Herstellens einer physikalischen Ladeverbindung mit der Ladesäule (10);
-- Aufbauen einer Kommunikationsverbindung über einen Kommunikationskanal zur Steuerung eines Ladevorgangs;
-- Detektieren eines Beendigungsereignisses des Ladevorgangs; und
-- nach dem Detektieren des Beendigungsereignisses, Neustarten der Steuereinheit (11) der Ladesäule (10).

## Beschreibung

### Technisches Gebiet

Die Erfindung betrifft ein Verfahren zum Betreiben einer Ladesäule für ein Elektrofahrzeug und eine Ladesäule für ein Elektrofahrzeug.

### Technischer Hintergrund

Beim Laden von Elektrofahrzeugen, z.B. gemäß dem Standard IEC15118, erfolgt eine Datenkommunikation zwischen dem Elektrofahrzeug und der Ladesäule, um den Ladevorgang zwischen Ladesäule und Elektrofahrzeug abzustimmen und zu steuern. Als "Ladesäule" wird hierbei jede Ladeeinrichtung verstanden, die zum Laden einer Traktionsbatterie eines Elektrofahrzeugs vorgesehen ist und fachüblich als "Electric Vehicle Supply Equipment" (EVSE) kategorisiert wird.

Hierbei ist es erforderlich, dass die von der Ladesäule an das Elektrofahrzeug abgegebene Energie exakt gemessen und dem richtigen Abnehmer in Rechnung gestellt wird, da andernfalls einem Abnehmer Energie berechnet wird, die er gar nicht bezogen hat, oder aber der Ladesäulenbetreiber auf tatsächlich angefallenen Energiekosten "sitzenbleibt".

Grundsätzlich besteht das Problem, dass eine jeweilige Implementierung der Datenkommunikationsschnittstelle der Ladesäule Schwachstellen (engl. Vulnerabilities) aufweisen kann. Da die Schnittstelle der Ladesäule öffentlich zugänglich ist, kann ein Angreifer diese Schwachstellen ausnutzen, um die Ladesäule zu einer von dem Angreifer gewünschten Fehlfunktion zu veranlassen. Es kommt erschwerend hinzu, dass in der Praxis selbst bekannte Schwachstellen häufig nicht zeitnah durch das Einspielen eines Patches oder Firmware-Updates geschlossen werden können. Wenn Open-Source-Softwarekomponenten für die Implementierung der Datenkommunikationsschnittstelle verwendet werden, können außerdem Exploits für Schwachstellen öffentlich im Internet verfügbar sein, die ein Angreifer direkt verwenden kann.

Es besteht daher Bedarf an verbesserten Verfahren zum Betreiben einer Ladesäule für Elektrofahrzeuge und verbesserten Ladesäulen. Die Erfindung löst diese sich angesichts des Standes der Technik stellende Aufgabe durch ein verbessertes Verfahren zum Betreiben einer Ladesäule für ein Elektrofahrzeug gemäß Anspruch 1 und eine Ladesäule für ein Elektrofahrzeug gemäß Anspruch 9. Bevorzugte Ausführungsformen und Weiterbildungen der Erfindung bilden Gegenstand der Unteransprüche.

### Zusammenfassung der Erfindung

Die Erfindung führt ein verbessertes Verfahren zum Betreiben einer Ladesäule für ein Elektrofahrzeug und zur Ausführung durch eine Steuereinheit der Ladesäule ein. Das erfindungsgemäße Verfahren verfügt wenigstens über die folgenden Schritte:
-- Detektieren eines Herstellens einer physikalischen Ladeverbindung mit der Ladesäule;
-- Aufbauen einer Kommunikationsverbindung über einen Kommunikationskanal zur Steuerung eines Ladevorgangs;
-- Detektieren eines Beendigungsereignisses des Ladevorgangs; und
-- nach dem Detektieren des Beendigungsereignisses, Neustarten der Steuereinheit der Ladesäule.

Erfindungsgemäß wird die Steuereinheit der Ladesäule also nach Beendigung eines Ladevorgangs neugestartet, so dass eine durch einen kommunikationstechnischen Angriff bewirkte Änderung des Programmcodes, der Daten oder des rechentechnischen Zustands der Steuereinheit der Ladesäule durch den Neustart unschädlich gemacht wird, weil die Steuereinheit hierdurch in einen bekannten und unveränderlichen Startzustand zurückgesetzt wird. Dadurch wird sichergestellt, dass eine während eines Ladevorgangs anhand der Kommunikationsverbindung unter Ausnutzung einer Sicherheitslücke des Programmcodes der Steuereinheit oder der Hardware der Steuereinheit selbst vorgenommene Manipulation sich nicht auf nachfolgende Ladevorgänge auswirkt oder während nachfolgender Ladevorgängen ausgenutzt werden kann.

Das Neustarten kann den Ladecontroller der Ladesäule unmittelbar betreffen, es kann aber auch ein Neustarten einer auf dem Ladecontroller ausgeführten virtuellen Maschine (VM), insbesondere einer Secure Virtual Machine (SVM), oder eines sicheren Containers (z.B. Docker-Container) erfolgen. Dies hat den Vorteil, dass nur diese spezielle VM neu gestartet werden muss und andere, nicht sicherheitsrelevante Funktionalitäten wie eine Anzeige der Ladesäule unterbrechungsfrei betrieben werden können. Dementsprechend kann der Begriff "Steuereinheit" hier als physische oder logische Einheit angesehen werden, die einen Mikrokontroller sein oder umfassen kann und zum Steuern der Ladesäule ausgebildet ist.

Vorzugsweise ist die Steuereinheit in zwei Abschnitte aufgeteilt, einen als sicher und einen als unsicher angesehenen Abschnitt. Das Detektieren des Beendigungsereignisses wird dabei von dem sicheren Abschnitt durchgeführt, der auch das Neustarten der Steuereinheit (oder wenigstens des unsicheren Abschnitts der Steuereinheit) in einer Art erzwingt, die nicht durch einen von einem Angreifer manipulierten unsicheren Abschnitt der Steuereinheit verhindert werden kann. Der unsichere Abschnitt der Steuereinheit baut die Kommunikationsverbindung zur Steuerung des Ladevorgangs auf und kann insbesondere auch die Ladesäule während des Ladevorgangs steuern und hierbei über die physikalische Ladeverbindung kommunizieren.

Ein Beispiel für eine solche Aufteilung der Steuereinheit in zwei Abschnitte ist ein Hypervisor als sicherer Abschnitt, der über eine direkte Hardwareanbindung den Ladevorgang wenigstens hinsichtlich des Vorliegens eines Beendigungsereignisses überwacht und eine auf dem Hypervisor als unsicherem Abschnitt der Steuereinheit laufende Betriebssoftware neustartet (logische Unterteilung in die zwei Abschnitte). In einem anderen Beispiel kann eine dedizierte Hardware für das Detektieren des Beendigungsereignisses vorgesehen sein, deren Funktion nicht von der Hardware, die die Steuereinheit bereitstellt (Mikrokontroller etc.), beeinflusst werden kann. Diese dedizierte Hardware stellt hierbei den sicheren Abschnitt der Steuereinheit dar und kann auf ein Detektieren des Beendigungsereignisses beispielsweise einen Hardware-Reset eines Mikrokontrollers durchführen oder eine Verbindung des Mikrokontrollers zu einem sogenannten Watchdog-Timer unterbrechen, so dass nach Ablauf einer von dem Watchdog-Timer gemessenen Zeitspanne von diesem ein Reset des Mikrokontrollers durchgeführt wird. Der Mikrokontroller einschließlich der von ihm ausgeführten Software stellt hierbei den unsicheren Abschnitt der Steuereinheit dar. Dies wird als physische Unterteilung in zwei Abschnitte angesehen.

Grundsätzlich ist auch möglich, mit dem Neustarten der Steuereinheit einen Neustart von weiteren Komponenten der Ladesäule anzustoßen, z.B. einer speicherprogrammierbaren Steuerung oder eines Kommunikationsmoduls wie eines Mobilfunkmodems oder eines DSL-Routers. Die Auswahl der neuzustartenden weiteren Komponenten kann abhängig von der Art und Anzahl von Beendigungsereignissen sein.

Allgemein wird die Kommunikationsverbindung übrigens bevorzugt unter Verwendung eines paketbasierten Kommunikationsprotokols wie beispielsweise des Internet Protocols (IP) aufgebaut und betrieben, vorzugsweise gemäß dem Standard ISO 15118 in seiner Version von 2019. Der für die Kommunikationsverbindung verwendete Kommunikationskanal kann kabelgebunden oder drahtlos ausgeführt sein, im erstgenannten Fall beispielsweise auf einer gesonderten Leitung des Ladekabels oder aber als Powerlinesignalisierung über den für die Leistungsübertragung von der Ladesäule an die Traktionsbatterie des Elektrofahrzeugs verwendeten Leiter des Ladekabels, im zweitgenannten Fall beispielsweise über einen geeigneten Kommunikationsstandard wie WLAN, NFC und Bluetooth oder, bei Verwendung induktiven Ladens, auch über eine geeignete Modulierung des elektromagnetischen Feldes der für das induktive Laden verwendeten Ladespulen.

Insbesondere kann das Neustarten (und selbstredend auch der Kaltstart) der Steuereinheit ein Auslesen einer kryptographisch geschützten Firmware aus einem schreibgeschützten Speicher (ROM, Flash usw.) und/oder ein Ausführen von Programmcode der Firmware nach einer erfolgreichen Prüfung des kryptographischen Schutzes (Signatur etc.) beinhalten. Beispielsweise kann zuerst ein gegen Schreibzugriff geschützter Bootloader ausgeführt werden, der eine Signatur der Firmware unter Verwendung eines öffentlichen Schlüssels prüft und die Firmware nach erfolgreicher Prüfung in einen flüchtigen Speicher (Arbeitsspeicher, RAM usw.) kopiert, entpackt und/oder entschlüsselt, bevor der Neustart durch Einsprung in den derart in den flüchtigen Speicher geschriebenen weiteren Programmcode fortgesetzt wird.

Das Detektieren des Beendigungsereignisses kann einen Schritt des Detektierens eines Endes einer Leistungsübertragung, eines Beendens der Kommunikationsverbindung, eines Unterbrechens der Ladeverbindung, eines Einhängens eines Ladesteckers an der Ladesäule, eines Einrollens eines Ladekabels der Ladesäule, eines Entriegelns der Ladeverbindung, eines Aktivierens eines Notausschalters der Ladesäule, eines Empfangens einer Quittierungsnachricht von einem Backend-Server oder eines Erreichens eines vorbestimmten Zustands eine Ladeprotokolls umfassen. Es kann auch eine Auswahl beziehungsweise Kombination der genannten Ereignisse als Beendigungsereignis detektiert werden, gegebenenfalls unter der zusätzlichen Vorgabe, dass die kombinierten Beendigungsereignisse in einer oder mehreren vorgegebenen Reihenfolgen erfolgen muss, um als Beendigungsereignis detektiert zu werden. Konkrete weitere

Beispiele für Beendigungsereignisse, die unter die obengenannten subsumiert werden können, sind:
-- Trennen der logischen Netzwerkverbindung zwischen Fahrzeug und Ladesäule,
-- Unterbrechen einer elektrischen Verbindung, z.B. eines Pilot-Signals oder der für die Energieübertragung verwendeten Stromleitung, was ein Abziehen des Ladesteckers anzeigt,
-- Erfassen von Personen oder Fahrzeugen in einem Erfassungsfeld eines Bewegungs- oder Näherungssensors der Ladesäule,
-- Abschließen eines bestimmten Schrittes in dem für den aktuellen Ladevorgang verwendeten Ladeprotokoll,
-- Empfangen einer "Charging Finished" Nachricht vom Elektrofahrzeug oder einer Neustart-Anweisung von einem Backend-System,
-- Terminieren einer für die Datenkommunikation verwendeten TLS-Verbindung (TLS, Transport Layer Security), und
-- Empfangen einer "Signed Meter Readings"-Nachricht von einem Backend-System.

Dabei kann der Schritt des Detektierens des Beendigungsereignisses einen Schritt des Prüfens einer Neustartbedingung umfassen. Der Schritt des Neustartens der Steuereinheit wird dann nur durchgeführt, wenn die Neustartbedingung erfüllt ist. Bei einer Aufteilung der Steuereinheit in einen sicheren und einen unsicheren Abschnitt wird auch das Prüfen der Neustartbedingung von dem sicheren Abschnitt durchgeführt.

Durch das zusätzliche Prüfen einer Neustartbedingung kann das Verhalten der Ladesäule genauer gesteuert werden. Beispielsweise kann die Neustartbedingung wenigstens eine Bedingung oder eine Kombination mehrerer Bedingungen umfassen, wobei die Bedingung oder Bedingungen ausgewählt wird aus:
-- Erreichen einer vorbestimmten Anzahl von Beendigungsereignissen;
-- Verstreichen einer ersten vorbestimmten Wartezeitspanne seit dem Detektieren des Beendigungsereignisses;
-- Verstreichen einer zweiten vorbestimmten Wartezeitspanne seit einer vorhergehenden Durchführung des Schrittes des Neustartens der Steuereinheit; und
-- Detektieren eines Entfernens des Elektrofahrzeugs.

Dadurch wird es beispielsweise möglich, das Neustarten der Steuereinheit der Ladesäule nur nach einer vorgegebenen Zahl von Ladevorgängen und/oder nach Verstreichen einer vorbestimmten Zeitspanne seit dem letzten Neustarten durchzuführen. Ebenso kann vorgegeben werden, dass der Neustart um eine vorbestimmte Zeitspanne verzögert gegenüber dem Detektieren des Beendigungsereignisses erfolgt und/oder nach dem Entfernen des zuvor aufgeladenen Elektrofahrzeugs von der Ladesäule.

Bei manchen Ausführungsformen des erfindungsgemäßen Verfahrens kann vorgesehen sein, dass das Verfahren zu dem Schritt des Detektierens des Beendigungsereignisses des Ladevorgangs zurückkehrt, wenn innerhalb einer dritten vorbestimmten Wartezeitspanne ein Fortsetzungsereignis des Ladevorgangs detektiert wird. Hierdurch wird es möglich, ein Neustarten der Steuereinheit aufgrund einer kurzzeitigen Störung zu vermeiden, obwohl hierzu kein ausreichender Anlass besteht. Andernfalls könnte der Ladevorgang versehentlich oder im Rahmen einer sogenannten Denial-of-Service-Attacke absichtlich gestört werden, so dass der gewünschte Ladevorgang undurchführbar wird. Beispielsweise kann vorgesehen sein, dass der Ladevorgang ohne Neustarten der Steuereinheit fortgesetzt wird (also zum Schritt des Detektierens des Beendigungsereignisses des Ladevorgangs zurückgekehrt wird), wenn innerhalb einer Zeitspannen von z.B. 10 Millisekunden, 100 Millisekunden, 1 Sekunde oder 10 Sekunden durch Detektieren eines Fortsetzungsereignisses (Datenkommunikation ist wieder störungsfrei möglich, die physische Verbindung von Ladesäule und Elektrofahrzeug ist wiederhergestellt usw.) festgestellt wird, dass der Ladevorgang fortgesetzt werden soll.

Vorzugsweise umfasst der Schritt des Neustartens der Steuereinheit einen Schritt des Überschreibens oder Löschens eines flüchtigen Speichers der Steuereinheit, insbesondere eines in dem flüchtigen Speicher gespeicherten kryptographischen Schlüssels. Hierdurch wird erreicht, dass Schlüsselmaterial nicht im flüchtigen Speicher der Steuereinheit hinterlassen und gegebenenfalls über einen weiteren Angriff ausgelesen wird oder eine im Rahmen eines vorhergehenden Angriffs in den flüchtigen Speicher geschriebene Schadroutine nicht durch einen weiteren Angriff angesprungen und ausgeführt werden kann. Alternativ oder zusätzlich kann bei Ausführungsformen der Erfindung auch vorgesehen sein, kryptographisches Schlüsselmaterial unmittelbar nach einer einzigen Nutzung aus dem flüchtigen Speicher zu löschen. Je nach Verwendungszweck eines jeweiligen kryptographischen Schlüssels können bestimmte Schlüssel dabei nur ein einziges Mal zwischen zwei Neustarts der Steuereinheit für ein Auslesen aus einem sogenannten Secure Element zur Verfügung stehen.

Der Schritt des Neustartens der Steuereinheit kann einen Schritt des Ausführens von in einem schreibgeschützten Speicher der Steuereinheit gespeichertem Programmcode umfassen. Dieser schreibgeschützte Programmcode kann die für das Herstellen des bekannten und unveränderlichen Startzustands der Steuereinheit verwendete Funktionalität bereitstellen. Indem dieser Programmcode schreibgeschützt und somit immun gegen Angriffe ist, wird sichergestellt, dass der gewünschte Startzustand auch tatsächlich erreicht wird.

Dabei kann vor dem Ausführen des Programmcodes ein Schritt des Prüfens einer kryptographischen Signatur des Programmcodes erfolgen und der Programmcode nur dann ausgeführt werden, wenn der Schritt des Prüfens der kryptographischen Signatur erfolgreich ist. Hierdurch wird zusätzlich Sicherheit vor einem physischen Angriff auf die Ladesäule erreicht, bei dem der Programmcode modifiziert oder durch einen anderen ersetzt wird, so dass die Ausführung des Programmcodes nicht den bekannten und unveränderlichen Startzustand der Steuereinheit herbeiführen kann.

Ein weiterer Erfindungsaspekt betrifft eine Ladesäule für ein Elektrofahrzeug und mit einer Steuereinheit, welche ausgebildet ist, das erfindungsgemäße Verfahren auszuführen.

Ein dritter Erfindungsaspekt betrifft einen Datenspeicher mit einem Programmcode, der, von einer Steuereinheit einer Ladesäule gemäß dem vorhergehenden Erfindungsaspekt ausgeführt, die Ladesäule das erfindungsgemäße Verfahren ausführen lässt.

### Kurzbeschreibung der Figuren

Die Erfindung wird nachfolgend unter Bezugnahme auf Abbildungen von Ausführungsbeispielen näher erläutert. Es zeigen:
Figur 1 ein Ausführungsbeispiel einer Ladeanordnung mit einer erfindungsgemäßen Ladesäule und einem Elektrofahrzeug; und
Figur 2 ein Ausführungsbeispiel eines erfindungsgemäßen Verfahrens zum Betreiben einer Ladesäule für ein Elektrofahrzeug.

### Ausführliche Beschreibung der Figuren

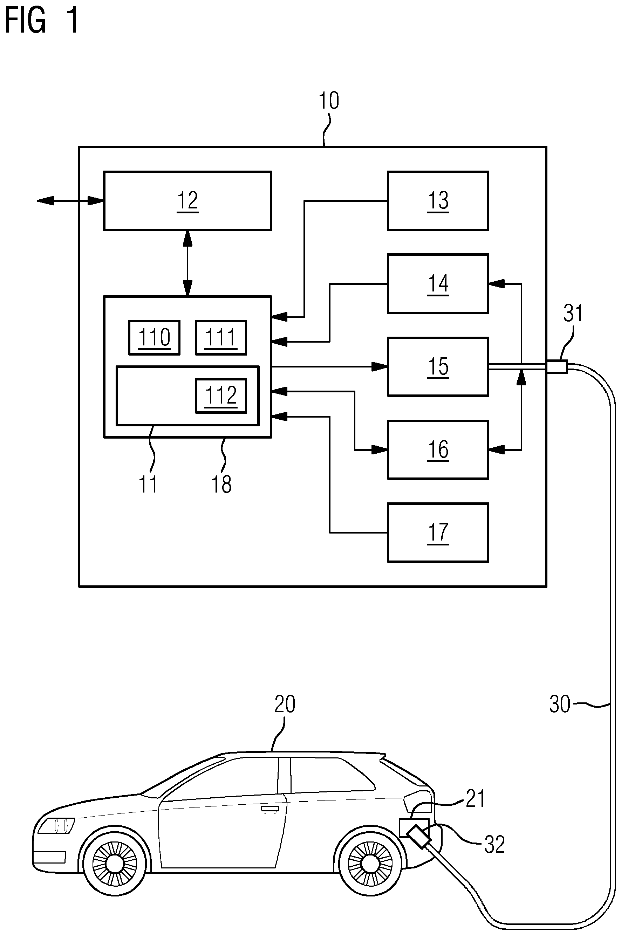

Figur 1 zeigt ein Ausführungsbeispiel einer Ladeanordnung mit einer erfindungsgemäßen Ladesäule 10 und einem Elektrofahrzeug 20. Die Ladesäule 10 und das Elektrofahrzeug 20 sind über ein Ladekabel 30 lösbar miteinander verbunden. Hierzu können an einem ladesäulenseitigen und/oder einem fahrzeugseitigen Ende des Ladekabels Anschlüsse 31, 32 vorgesehen sein. Im Fall von Gleichspannungsladen mit hoher Ladeleistung ist das Ladekabel 30 jedoch üblicherweise fest mit der Ladesäule 10 verbunden. Die Erfindung beschränkt sich jedoch nicht auf das Laden über ein Ladekabel 30, sondern kann auch ohne Einschränkung bei induktiven Ladevorrichtungen Anwendung finden.

Die für das Laden des Elektrofahrzeugs 20 benötigte elektrische Energie wird über eine Ladeelektronik 15 bereitgestellt. Die Ladeelektronik 15 stellt die zu einem jeweiligen Zeitpunkt eines Ladevorgangs benötigte momentane Ladeleistung mit den richtigen elektrischen Parametern zur Verfügung und wird dazu - wie auch weitere Komponenten der Ladesäule 10 - von einer Steuereinheit 11 gesteuert. Die Steuereinheit 11 ist in dem gezeigten Beispiel als eine Betriebssoftware oder eine Kombination von Software- und Hardwareelementen ausgebildet, die eine virtuelle Maschine 112 zur Ausführung bringen können. Beispielsweise kann es sich um einen Hypervisor handeln, der auf einer Hosthardware 18 implementiert ist. Die Hosthardware 18 kann im einfachsten Fall ein Mikrokontroller sein.

Die Steuereinheit 11 ist in Ausführung der virtuellen Maschine 112 für die Überwachung und Steuerung der von der Ladesäule 10 durchgeführten Ladevorgänge verantwortlich. Im gezeigten Ausführungsbeispiel besitzt die Hosthardware 18 einen schreibgeschützten Speicher 110 und einen flüchtigen Speicher 111.

Der schreibgeschützte Speicher 110 kann als ROM oder Flashspeicher ausgeführt sein und zur Speicherung von Programmcode und -daten dienen, die von der Steuereinheit 11 beim Starten und Neustarten oder während des Betriebes der Ladesäule 10 ausgeführt beziehungsweise verarbeitet werden. Beispielsweise kann in dem schreibgeschützten Speicher 110 ein Bootloader und/oder ein für die Ausführung durch die Steuereinheit 11 vorgesehenes Bootimage der virtuellen Maschine 112 abgelegt sein.

Der flüchtige Speicher 111 dient als Arbeitsspeicher der Steuereinheit 11 zum Speichern von während der Datenverarbeitung anfallenden Daten. Neben den genannten Speichern ist außerdem ein Schlüsselspeicher 17 vorgesehen, der kryptographisches Schlüsselmaterial wie einen privaten Schlüssel eines kryptographischen Schlüsselpaares gegen unbefugten Zugriff gesichert enthält. Die Steuereinheit 11 kann dieses Schlüsselmaterial nicht auslesen und damit nicht selbst für den Aufbau der Kommunikationsverbindung, Authentifizierungszwecke und sonstige typische Funktionalitäten von Ladeinfrastrukturen verwenden. Die Steuereinheit 11 kann jedoch den Schlüsselspeicher 17 für kryptographische Operationen wie das Signieren oder Entschlüsseln von dem Schlüsselspeicher 17 übermittelten Datensätzen verwenden, was für die genannten Zwecke benutzt werden kann und ein hohes Maß an Sicherheit gewährleistet.

Die Steuereinheit 11 ist im gezeigten Ausführungsbeispiel außerdem mit einer Kommunikationseinheit 16 verbunden, welche vorliegend als Powerline-Kommunikationseinheit dazu ausgebildet ist, über das Ladekabel 30 mit dem Elektrofahrzeug 20 zu kommunizieren. Alternativ können auch für die Kommunikationsverbindung exklusiv verwendete Signalleitungen oder eine drahtlose Kommunikation zwischen Ladesäule 10 und Elektrofahrzeug 20 verwendet werden. Die Kommunikationseinheit 16 sendet und empfängt Daten über das Ladekabel 30, welche sie von der Steuereinheit 11 erhält oder an diese weiterleitet.

Die Ladesäule 10 verfügt außerdem über einen Näherungssensor 13 und einen Kontaktsensor 14, welche ebenfalls mit der Steuereinheit 11 verbunden sind. Der Näherungssensor 13 dient dazu, die Anwesenheit oder Abwesenheit eines Elektrofahrzeugs zu erfassen, wodurch auch ein Entfernen eines zuletzt aufgeladenen und somit während des Ladevorgangs in Reichweite des Ladekabels 30 befindlichen Elektrofahrzeugs durch die Steuereinheit 11 festgestellt werden kann. Beispielsweise kann ein Entfernen eines soeben aufgeladenen Elektrofahrzeugs als Beendigungsereignis im Sinne des erfindungsgemäßen Verfahrens detektiert werden. Der Kontaktsensor 14 dient dazu zu detektieren, ob ein Elektrofahrzeug mit der Ladesäule 10 verbunden, also ein elektrischer Kontakt zwischen Ladesäule 10 und Elektrofahrzeug 20 hergestellt ist. Dazu kann der Kontaktsensor 14 beispielsweise eine Impedanz zwischen zwei Leitungen des Ladekabels 30 beziehungsweise von mit diesen Leitungen zu verbindenden Kontakten des Anschlusses 31 messen. Liegt diese Impedanz beispielsweise unter einem vorbestimmten Schwellwert, kann geschlussfolgert werden, dass ein elektrischer Kontakt zu einem Elektrofahrzeug 20 hergestellt wurde.

Die Ladesäule 10 der Figur 1 verfügt außerdem über einen Router 12, welcher beispielsweise als LTE- oder DSL-Router dazu ausgebildet sein kann, Daten über ein drahtloses oder drahtgebundenes Netzwerk zwischen der Ladesäule 10 (insbesondere der Steuereinheit 11 der Ladesäule) und einem Backend-Server-System (nicht dargestellt) auszutauschen. In bestimmten Ausführungsvarianten kann die Steuereinheit 11 dazu ausgebildet sein, den Empfang einer Nachricht eines vorbestimmten Inhaltes über den Router 12 als Beendigungsereignis zu detektieren. Beispielsweise kann eine solche Nachricht eine erfolgreiche Entgegennahme eines von der Ladesäule 10 über einen abgeschlossenen Ladevorgang erstellten Abrechnungsdatensatzes durch das Backend-Server-System anzeigen. In ähnlicher Weise kann die Steuereinheit 11 auch ein Beendigungsereignis detektieren, wenn sie über die Kommunikationseinheit eine Nachricht eines vorbestimmten Inhalts vom Elektrofahrzeug 20 erhält. Das Elektrofahrzeug 20 kann diese Funktionalität beispielsweise nutzen, wenn es seinerseits eine Verletzung eines für die Kommunikationsverbindung zwischen Elektrofahrzeug 20 und Ladesäule 10 vereinbarten Protokolls bemerkt. Die Detektion des Beendigungsereignisses erfolgt dabei außerhalb der virtuellen Maschine 112, so dass die Funktionalität zum Detektieren des Beendigungsereignisses und/oder des Neustartens der Steuereinheit 11 nicht durch einen Angreifer modifiziert oder unwirksam gemacht werden kann.

Detektiert die Steuereinheit 11 ein Beendigungsereignis, so führt sie einen Neustart durch, um einen definierten Zustand zu erreichen und durch eventuelle Angriffe bewirkte Zustandsänderungen der Steuereinheit 11 usw. zu neutralisieren. Gegebenenfalls prüft die Steuereinheit 11, wie oben beschrieben, vor dem Neustart noch auf das Vorliegen eines Fortsetzungsereignisses und/oder eine Neustartbedingung. Das Neustarten kann die gesamte Steuereinheit 11 betreffen oder nur die virtuelle Maschine 112. Auch ein Neustarten der Hosthardware 18 ist möglich, wodurch automatisch auch die Steuereinheit 11 und die virtuelle Maschine 112 neugestartet werden.

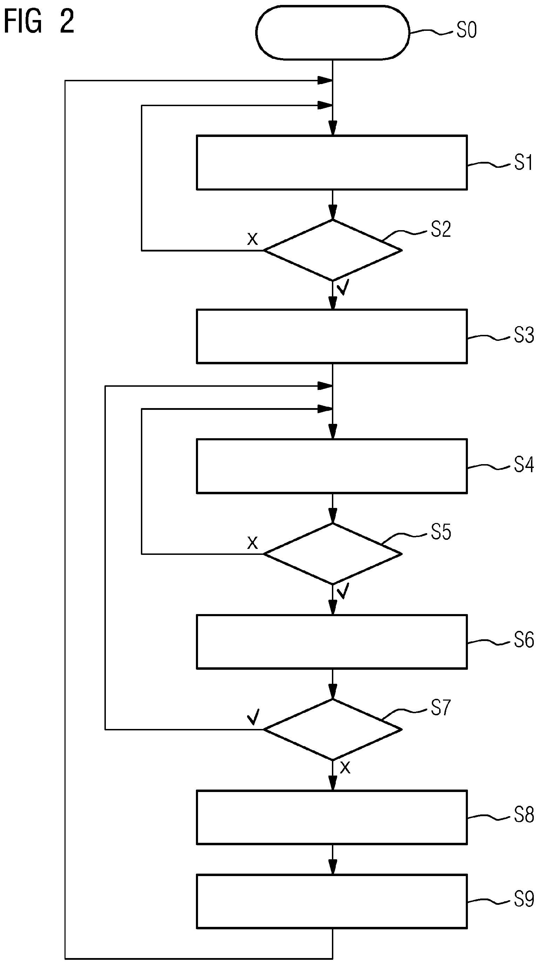

Figur 2 zeigt ein Ausführungsbeispiel eines erfindungsgemäßen Verfahrens zum Betreiben einer Ladesäule für ein Elektrofahrzeug, das mit einem Kaltstart S0 beginnt. In einem nachfolgenden Schritt S1 wird detektiert, ob eine physikalische Ladeverbindung zwischen dem Elektroauto und der Ladesäule hergestellt wurde. Die physikalische Ladeverbindung kann beispielsweise eine kabelgebundene oder eine induktive Ladeverbindung sein. Wird in einem Prüfschritt S2 festgestellt, dass keine physikalische Ladeverbindung vorhanden ist, wird zum Schritt S1 zurückverzweigt. Ist jedoch eine physikalische Ladeverbindung vorhanden, wird mit einem Schritt S3 fortgesetzt, in dem eine Kommunikationsverbindung zwischen Ladesäule und Elektrofahrzeug über einen Kommunikationskanal zur Steuerung des Ladevorgangs aufgebaut wird. Hierbei kann beispielsweise eine TLS-Verbindung mit Aushandeln von für die Kommunikationsverbindung verwendeten kryptographischen Schlüsseln vorgesehen sein. Über die Kommunikationsverbindung wird der Ladevorgang, der im Flussdiagramm der Figur 2 als Schritt S4 dargestellt ist, gesteuert. Beim Laden des Elektrofahrzeugs wird fortlaufend in einem Schritt S5 geprüft, ob ein Beendigungsereignis detektiert wurde. Ist dies nicht der Fall, wird das Laden von Schritt S4 fortgesetzt. Wird hingegen ein Beendigungsereignis detektiert, so wird mit einem Schritt S6 fortgesetzt, in dem eine vorbestimmte Wartezeitspanne gewartet wird, bevor in Schritt S7 geprüft wird, ob ein Fortsetzungsereignis detektiert wird. Hierbei kann es sich beispielsweise um ein Ereignis handeln, das anzeigt, dass der Ladevorgang nicht abgebrochen werden soll und ein Fehler, der zu einem Abbruch hätte führen können, nicht mehr vorliegt. Entsprechend dem Ergebnis der Prüfung wird entweder der Ladevorgang in Schritt S4 fortgesetzt oder aber entschieden, dass ein Neustart der Steuereinheit durchgeführt werden soll. In letztgenanntem Fall werden gemäß dem in Figur 2 dargestellten Ausführungsbeispiel zuerst in einem Schritt S8 ein flüchtiger Speicher der Steuereinheit und darin vorhandene kryptographische Schlüssel sowie Programmcode und -daten gelöscht, bevor anschließend in Schritt S9 ein Reset und Neustart der Steuereinheit durchgeführt wird.

Das erfindungsgemäße Verfahren kann selbstredend um die zahlreichen aus dem Stand der Technik wohlbekannten weiteren Schritte eines Ladevorgangs wie beispielsweise Schritten des Authentifizierens des Elektrofahrzeugs oder seines Betreibers und des Erstellens von Abrechnungsbelegen etc. erweitert werden. Solche Schritte stellen jedoch nicht den Kern der Erfindung dar und können durch eine im technischen Gebiet durchschnittlich kompetente Person ohne weitere Schwierigkeiten ausgewählt und mit den erfindungswesentlichen Schritten des erfindungsgemäßen Verfahrens kombiniert werden.

Die Erfindung wurde unter Bezugnahme auf Ausführungsbeispiele näher erläutert. Die Ausführungsbeispiele dienen lediglich dem besseren Verständnis und sollen die Erfindung, die allein durch die nachfolgenden Ansprüche definiert wird, nicht beschränken.

### Bezugszeichenliste

- 10: Ladesäule
- 11: Steuereinheit
- 12: Router
- 13: Näherungssensor
- 14: Kontaktsensor
- 15: Ladeelektronik
- 16: Kommunikationseinheit
- 17: Schlüsselspeicher
- 18: Hosthardware
- 110: schreibgeschützter Speicher
- 111: flüchtiger Speicher
- 112: virtuelle Maschine

- 20: Elektrofahrzeug
- 21: Ladeschnittstelle

- 30: Ladekabel
- 31: ladesäulenseitiger Anschluss
- 32: fahrzeugseitiger Anschluss

## Patentansprüche

1. Ein Verfahren zum Betreiben einer Ladesäule (10) für ein Elektrofahrzeug (20) und zur Ausführung durch eine Steuereinheit (11) der Ladesäule (10), mit den Schritten:
-- Detektieren eines Herstellens einer physikalischen Ladeverbindung (30) mit der Ladesäule (10);
-- Aufbauen einer Kommunikationsverbindung über einen Kommunikationskanal zur Steuerung eines Ladevorgangs;
-- Detektieren eines Beendigungsereignisses des Ladevorgangs; und
-- nach dem Detektieren des Beendigungsereignisses, Neustarten der Steuereinheit (11) der Ladesäule (10).

2. Das Verfahren des vorhergehenden Anspruchs, bei dem das Detektieren des Beendigungsereignisses einen Schritt des Detektierens eines Endes einer Leistungsübertragung, eines Beendens der Kommunikationsverbindung, eines Unterbrechens der Ladeverbindung, eines Einhängens eines Ladesteckers (32) an der Ladesäule (10), eines Einrollens eines Ladekabels (30) der Ladesäule (10), eines Entriegelns der Ladeverbindung, eines Aktivierens eines Notausschalters der Ladesäule (10), eines Empfangens einer Quittierungsnachricht von einem Backend-Server oder eines Erreichens eines vorbestimmten Zustands eine Ladeprotokolls umfasst.

3. Das Verfahren eines der vorhergehenden Ansprüche, bei dem der Schritt des Detektierens des Beendigungsereignisses einen Schritt des Prüfens einer Neustartbedingung umfasst und der Schritt des Neustartens der Steuereinheit (11) nur durchgeführt wird, wenn die Neustartbedingung erfüllt ist.

4. Das Verfahren des vorhergehenden Anspruchs, bei dem die Neustartbedingung wenigstens eine Bedingung oder eine Kombination mehrerer Bedingungen umfasst, ausgewählt aus:
-- Erreichen einer vorbestimmten Anzahl von Beendigungsereignissen;
-- Verstreichen einer ersten vorbestimmten Wartezeitspanne seit dem Detektieren des Beendigungsereignisses;
-- Verstreichen einer zweiten vorbestimmten Wartezeitspanne seit einer vorhergehenden Durchführung des Schrittes des Neustartens der Steuereinheit (11); und
-- Detektieren eines Entfernens des Elektrofahrzeugs (20).

5. Das Verfahren eines der vorhergehenden Ansprüche, bei dem das Verfahren zu dem Schritt des Detektierens des Beendigungsereignisses des Ladevorgangs zurückgekehrt wird, wenn innerhalb einer dritten vorbestimmten Wartezeitspanne ein Fortsetzungsereignis des Ladevorgangs detektiert wird.

6. Das Verfahren eines der vorhergehenden Ansprüche, bei dem der Schritt des Neustartens der Steuereinheit (11) einen Schritt des Überschreibens oder Löschens eines flüchtigen Speichers (111) der Steuereinheit (11), insbesondere eines in dem flüchtigen Speicher (111) gespeicherten kryptographischen Schlüssels, umfasst.

7. Das Verfahren eines der vorhergehenden Ansprüche, bei dem der Schritt des Neustartens der Steuereinheit (11) einen Schritt des Ausführens von in einem schreibgeschützten Speicher (110) der Steuereinheit (11) gespeichertem Programmcode umfasst.

8. Das Verfahren des vorhergehenden Anspruchs, bei dem vor dem Ausführen des Programmcodes ein Schritt des Prüfens einer kryptographischen Signatur des Programmcodes erfolgt und der Programmcode nur dann ausgeführt wird, wenn der Schritt des Prüfens der kryptographischen Signatur erfolgreich ist.

9. Eine Ladesäule (10) für ein Elektrofahrzeug (20) und mit einer Steuereinheit (11), welche ausgebildet ist, das Verfahren eines der vorhergehenden Ansprüche auszuführen.

10. Ein Datenspeicher mit einem Programmcode, der, von einer Steuereinheit (11) einer Ladesäule (10) gemäß dem vorhergehenden Anspruch ausgeführt, die Ladesäule (10) das Verfahren eines der Ansprüche 1 bis 8 ausführen lässt.
